## Europäisches Patentamt

(19) **European Patent Office**

**Office européen des brevets**

(11) Publication number: **0 247 570**
**B1**

(12) **EUROPEAN PATENT SPECIFICATION**

(45) Date of publication of the patent specification:
27.12.90

(51) Int. Cl.⁵: **F16L 5/02**, B62D 25/20

(21) Application number: 87107618.8

(22) Date of filing: 25.05.87

(54) **Perforated plate for connecting together corresponding ends of cables, pipes and the like, in particular for motor vehicles.**

(30) Priority: **27.05.86 IT 5346386 U**

(43) Date of publication of application:
**02.12.87 Bulletin 87/49**

(45) Publication of the grant of the patent:
**27.12.90 Bulletin 90/52**

(84) Designated Contracting States:
**DE ES FR GB NL SE**

(56) References cited:
**US-A- 1 583 000**
**US-A- 1 585 541**
**US-A- 2 459 370**
**US-A- 2 846 246**
**US-A- 4 482 172**

(73) Proprietor: **IVECO FIAT S.p.A., Via Puglia 35,
I-10156 Torino(IT)**

(72) Inventor: **Zanello, Giacomo, Via Filadelfia, 155/17,
I-10100 Torino(IT)**
Inventor: **Vindroia, Vincenzo, Via Vittime di Bologna, 12,
I-10017 Borgaro Torinese(IT)**

(74) Representative: **Boggio, Luigi et al, STUDIO TORTA
Società Semplice Via Viotti, 9, I-10121 Torino(IT)**

ACTORUM AG

## Description

This invention relates to a perforated plate for connecting together corresponding ends of cables, pipes and the like, in particular for motor vehicles.

In the motor vehicle field it is known to connect together corresponding ends of cables, pipes and the like using plates comprising through bores in which corresponding end portions of the cable or pipe are engaged, these thus becoming supported and connected together by the plate. This is especially advantageous in that the plate provides a conveniently air-tight and dust-tight guided passage for the cable or pipe, thus contributing overall to simplifying their assembly.

Although the known plates are substantially all of the aforesaid type, they each have an individual structure designed to solve certain problems, but which on the other hand leads to certain drawbacks. By way of example, in a plate of known type the bores are disposed in parallel rows, each of which appears on the surface of a respective step provided on the plate such as to form an acute angle of predetermined value to the resting plane defined by a connection flange extending from the plate itself. Such a structure designed to connect together a large number of cables or pipes has the drawback, when assembled, that the end portions of said cables or pipes extend perpendicular to the plate surface into which said through bores open, consequently obstructing a peripheral zone adjacent to the plate when in use.

It is also known from the US-A 2 459 370 a packing assembly for sealing an aperture in a wall around a plurality of conduits passing therethrough. The assembly includes cylindrical means provided with bores crossed by the conduits and forming an acute angle inclined a predetermined value with respect to the axis of the cylindrical means. This packing assembly has the same disadvantage of the previous discussed known plate, especially when a large number of conduits are to be connected.

The object of the present invention is to provide a perforated plate of such a structure as to allow a large number of cables or pipes to be connected together, but without said cables or pipes substantially obstructing zones adjacent to said plate when in use.

Said object is attained according to the present invention by an arrangement of a perforated plate for connecting corresponding ends of cables, pipes and the like, as defined in the claim 1.

More specifically, this object is attained by a perforated plate for connecting corresponding ends of cables, pipes and the like, in particular for motor vehicles, comprising a plurality of through bores arranged in at least one row and having respective axes lying in planes parallel to each other and perpendicular to a resting plane of said plate, each one of said through bores being located in correspondence with an associated axis perpendicular to said resting plane and complanar with the respective one of said axes, as to form therewith an acute angle of a predetermined value, and characterised in that the opposite end portions of each of said through bores are arranged to receive connection means for the respective end portions of said cables, pipes and the like, and in that respective axes of adajacent through bores form said acute angle on opposite sides of said associated perpendicular axis.

The present invention will be more apparent from the description of a preferred embodiment thereof given hereinafter by way of non-limiting example with reference to the accompanying drawings, in which:

Figure 1 is a partly sectional side view of a driver's cab of an industrial vehicle showing a plate constructed in accordance with the present invention;

Figure 2 is a detailed view of the plate of Figure 1 to an enlarged scale;

Figures 3, 4 and 5 are front, side and rear elevational views of the plate of Figure 2 to a further enlarged scale;

Figures 6 and 7 are sections on the lines VI-VI and VII-VII of Figure 3; and

Figure 8 relates to a modification to a detail of the plate according to the invention, shown in analogous section to that of Figure 6.

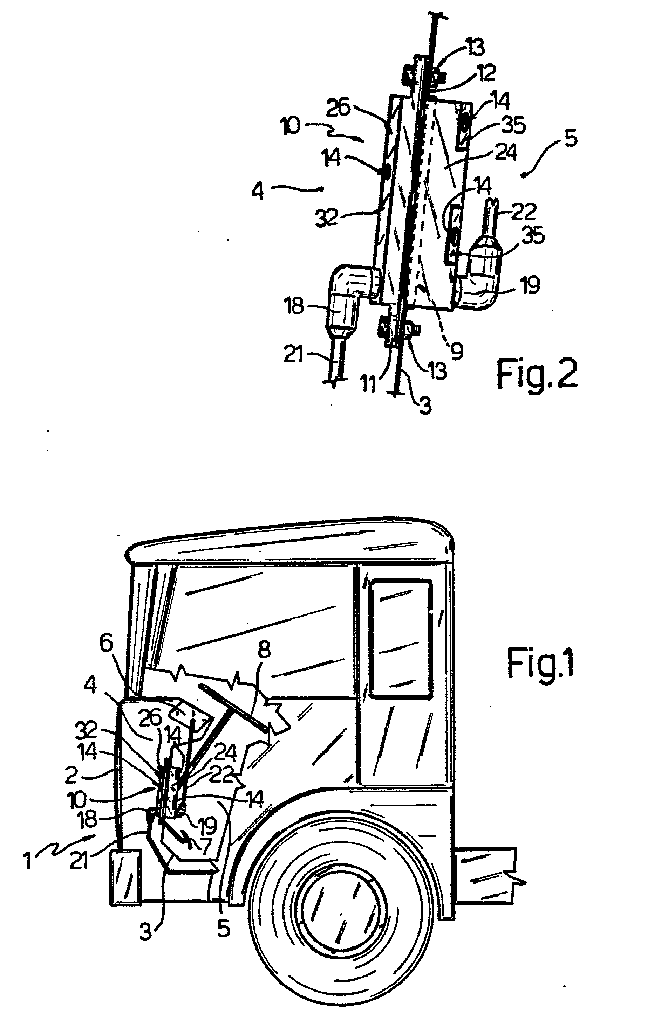

In Figure 1, the reference numeral 1 indicates overall an industrial vehicle cab showing in detail a front wall 2 and a dividing wall 3 which is interposed between the wall 2 and the driver's compartment of the cab 1, so as to define two respective chambers 4, 5. An instrument panel 6 is provided above the dividing wall 3, and a pedal 7 and steering wheel 8 can be seen on the side facing the interior of the chamber 5. With particular reference to Figure 2, the wall 3 comprises an aperture 9 which is engaged by a plate 10 constructed in accordance with the present invention. More particularly, the plate 10 has a flanged peripheral portion 11 which is fixed, at its resting surface 12, to a respective edge of the wall 3 by a pair of bolts 13. The plate 10 comprises a plurality of through bores 14 each of which has its opposing ends suitably threaded, to be engaged when in use by respective L-shaped end connectors 18, 19 connected to respective pipes 21, 22 situated in the chambers 4 and 5 respectively.

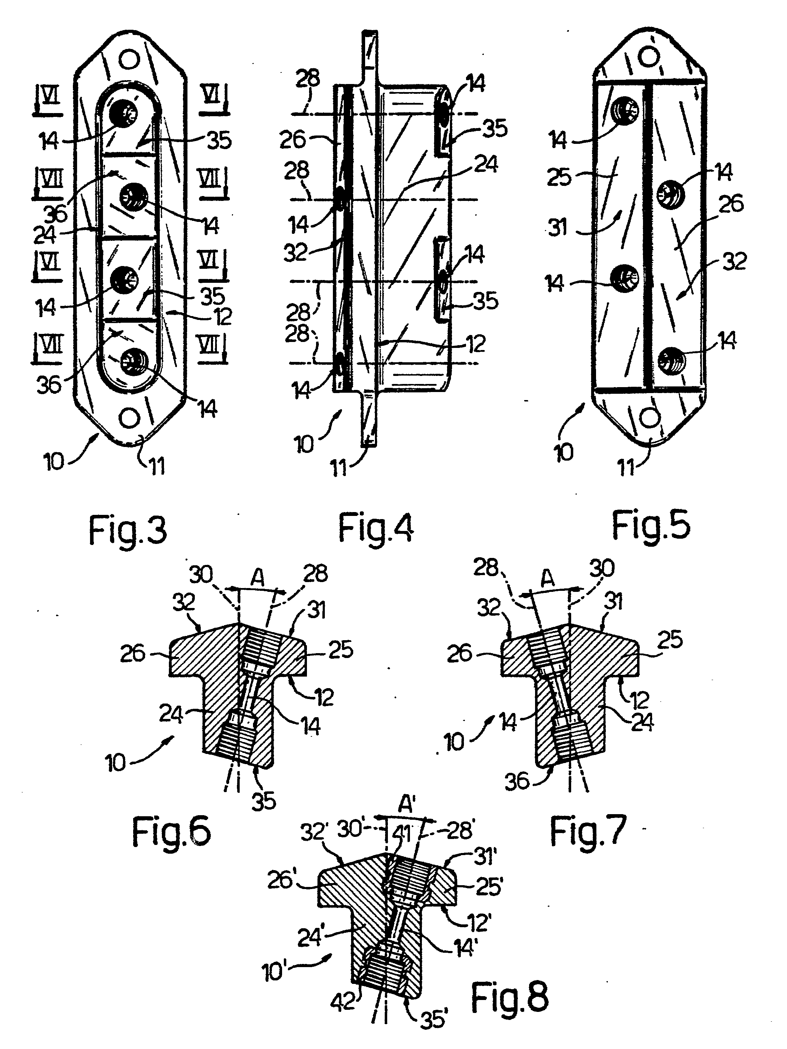

With particular reference to Figures 3, 4, 5, 6 and 7, it can be seen that substantially in correspondence with the bores 14 the plate 10 is of essentially T-shaped cross-section with a shank 24 and a pair of opposing appendices 25, 26 which are bounded, on the side facing the shank 24, by said surface 12. With particular reference to Figure 4, it can be seen that the through bores 14 have their respective axes 28 lying in planes which are parallel to each other and perpendicular to the resting plane defined by the surface 12. In Figures 6 and 7, the reference numeral 30 indicates an axis perpendicular to the resting plane defined by the surface 12 and drawn in the plane in which the axis 28 of the respective bore 14 lies. Finally, with reference to Figures 3 to 7, it can be seen that the axis 28 of each bore 14 does not coincide with said axis 30 but instead defines therewith a respective acute angle, indicated by A, such that adjacent through bores 14 open one in correspondence with a surface 31 of the appendix 25 and the other in correspondence with a surface 32 of the appendix 26 on the opposite side to the surface 12.

At the end distant from the appendices 25, 26, the through bore 14 opens into a respective end surface 35, 36 of the shank 24. Conveniently, the surfaces 31 and 35 lie in parallel planes traversed perpendicularly by the axis 28 of the bore 14. Likewise, the surfaces 32 and 36 lie in parallel planes also traversed in a perpendicular direction by the axis 28 of the bore 14.

Figure 8 shows a modification regarding a part of the plate 10. As most of the details are identical with the corresponding details of the plate 10, the same reference numerals are used for this figure as on the corresponding Figure 6 but with the addition of an apostrophe. The only detail in which the plate 10' differs from the plate 10 is the use of two internally threaded inserts 41, 42 housed in the opposite ends of each bore 14'. These inserts are conveniently formed of metal material and externally comprise annular grooves which ensure their secure connection to the body of the respective plate 10', which as in the case of the plate 10 can be conveniently constructed by moulding plastics material.

The plate 10 is used in substantially known manner. In this respect, after fixing it to the dividing wall 3 by the bolts 13, it is necessary only to insert the various end connectors into the respective threaded seats formed by the bores 14 to automatically obtain connection between the pipes located in the chambers 4 and 5 of the cab 1.

The advantages of the plate 10 constructed in accordance with the present invention are apparent from an examination of its characteristics. Firstly, it can be seen that the concentration of through bores 14 is very high with respect to the surface area of the plate 16 inserted through the aperture 9 of the dividing wall 3. Correspondingly, interference with those portions of the chambers 4 and 5 facing the plate 10 is conveniently reduced, in that this latter is able to accept L-shaped end connectors which enable the pipes to remain adhering to the plate 10 but without interfering with each other by virtue of the fact that each connector is fitted to the plate 10 alternately on one and the other side of the plane defined by the axes 30 running perpendicular to the resting surface 12. It will also be noted that the particular structure of those portions of the plate 10 in correspondence with the bores 14 (see Figures 6 and 7 in particular) conveniently simplifies the operations involved in making-up the production mould for the plate 10. In this respect, it is necessary only to construct identical blocks to be placed side-by-side in said mould, taking care when making-up the mould to position successive blocks alternately rotated through 180° about the axis 30.

The angle A between the axes 28 and 30, which is conveniently 15°, can be suitably increased or decreased, for example within the range of 10° to 30°. It is also not strictly essential for the axes 28 of the bores 14 to lie in planes perpendicular to the resting surface 12. The axes 28 could in fact be partially inclined, even to the extent of forming an angle very close to 90° to the surface 12, without leaving the scope of the present invention on this account. Finally, the present invention also includes any plate comprising several equidistant rows of through bores 14 instead of a single row as shown in Figure 3.

## Claims

1. An arrangement of a perforated plate (10) for connecting corresponding ends of cables, pipes and the like, said plate (10) being fixed in correspondence with an aperture (9) in a dividing wall (3) interposed between a first chamber (4) and a second chamber (5) of a motor vehicle (1), said plate (10) being of the type comprising a plurality of through bores (14), the opposing end portions of each of which are arranged to receive connection means (18, 19) for respective end portions (21, 22) of said cables, pipes and the like housed in said first chamber (4) and said second chamber (5) respectively, said through bores (14) being arranged in at least one row and having respective axes (28) lying in planes which are parallel to each other and perpendicular to the plane (12) in which said plate (10) rests against said dividing wall (3), the axis (28) of each said through bore (14) forming, with an associated axis (30) perpendicular to said resting plane (12) and lying in the parallel plane in which the respective axis (28) of said bore (14) lies, a respective acute angle (A) of predetermined value, characterised in that the axes (28) of adjacent through bores (14) form said acute angle (A) on opposite sides of said associated axis (30).

2. An arrangement as claimed in claim 1, characterised said plate (10) has, in correspondence with each through bore (14), a substantially T-shaped cross-section with a shank (24) arranged to extend through said aperture (9), and with a pair of opposing appendices (25, 26) which when in use are bounded on the side facing of said dividing wall (3) by said resting plane (12), said end portions of said through bores (14) opening respectively into opposing surfaces (31, 32; 35, 36) respectively of said appendices (25, 26) and of said shank (24) in correspondence with siad T-shaped cross-section, said connecting means including for each through bore (14) a pair of L-shaped end connectors (18, 19), each one arranged with a portion parallel to one of said surfaces (31, 32; 35, 36).

3. A perforated plate (10) for connecting corresponding ends of cables, pipes and the like, in particular for motor vehicles, comprising a plurality of through bores (14) arranged in at least one row and having respective axes (28) lying in planes parallel to each other and perpendicular to a resting plane (12) of said plate (10), each one of said through bores (14) being located in corrsporndence with an associated axis (30) perpendicular to said resting plane (12) and complanar with the respective one of said axes (28), as to form therewith an acute angle (A) of a predetermined value, characterised in that the opposite end portions of each of said through bores (14) are arranged to receive connection means (18, 19) for the respective end portions (21, 22) of said cables, pipes and the like, and in that the axes (28) of adjacent through bores (14) form said acute angle (A) on opposite sides of said associated perpendicular axis (30).

4. A plate as claimed in claim 3, characterised by having, in correspondence with each through bore (14), a substantially T-shaped cross-section with a shank (24) and a pair of opposing appendices (25, 26) on which said resting plane (12) is provided, said end portions of said through bores (14) opening respectively into opposing surfaces (31, 32; 35, 36) respectively of said appendices (25, 26) and of said shank (24) in correspondence with said T-shaped cross-section.

5. A plate as claimed in claim 4, characterised in that said surfaces (31, 32) of said appendices (25, 26) into which one end of said through bores (14) opens are perpendicular to the respective axes (28), the corresponding surfaces (35, 36) of said shank (24) into which the opposite end portion of said through bores (14) opens being parallel to the respective surfaces (31, 32) of said appendices (25, 26).

6. A plate as claimed in any one of the preceding claims, characterised in that said opposite end portions of said through bores (14) are internally threaded.

7. A plate as claimed in any one of the preceding claims, characterised in that each said end portion of each said through bore (14) internally houses an internally threaded tubular insert (41, 42).

8. A plate as claimed in any one of the preceding claims, characterised in that said acute angle (A) lies substantially between 10° and 30°.

9. A plate as claimed in claim 8, characterised in that said acute angle (A) is of the order of 15°.

## Patentansprüche

1. Eine Anordnung einer perforierten Platte (10) für das Verbinden entsprechender Enden von Kabeln, Rohren und dergleichen, welche Platte (10) in Übereinstimmung mit einer Öffnung (9) in einer Trennwandung (3) befestigt ist, eingefügt zwischen einer ersten Kammer (4) und einer zweiten Kammer (5) eines Kraftfahrzeugs (1), welche Platte (10) von der Bauart ist mit einer Mehrzahl von durchgehenden Bohrungen (14), deren einander abgewandte Endabschnitte jeweils zur Aufnahme von Verbindungsmitteln (18, 19) für entsprechende Endabschnitte (21, 22) der Kabel, Rohre und dergleichen ausgebildet sind, die in der ersten Kammer (4) bzw. zweiten Kammer (5) untergebracht sind, welche durchgehenden Bohrungen (14) in mindestens einer Reihe angeordnet sind und entsprechende Achsen (28) aufweisen, die in Ebenen liegen, die parallel zueinander und senkrecht zu der Ebene (12) verlaufen, in der die Platte (10) an der Trennwandung (3) anliegt, wobei die Achse (28) jeder durchgehenden Bohrung (14) mit einer zugeordneten Achse (30), die senkrecht zu der Anlageebene (12) verläuft und in der parallelen Ebene liegt, in der die entsprechende Achse (28) der Bohrung (14) liegt, einen entsprechenden spitzen Winkel (A) vorgegebenen Wertes bildet, dadurch gekennzeichnet, daß die Achsen (28) benachbarter durchgehender Bohrungen (14) diesen spitzen Winkel (A) auf einander abgekehrten Seiten der zugeordneten Achse (30) bilden.

2. Eine Anordnung nach Anspruch 1, dadurch gekennzeichnet, daß die Platte (10) in Übereinstimmung mit jeder durchgehenden Bohrung (14) einen im wesentlichen T-förmigen Querschnitt aufweist mit einem Schenkel (24), ausgebildet zur Erstreckung durch die Öffnung (9) und mit einem Paar voneinander abgekehrten Fortsätzen (25, 26), die im Betrieb bündig sind mit der Seitenfläche der Trennwandung (3) in der Anlageebene (12), welche Endabschnitte der durchgehenden Bohrungen (14) sich jeweils in einander abgekehrte Oberflächen (31, 32; 35, 36) der Fortsätze (25, 26) bzw. des Schenkels (24) öffnen in Übereinstimmung mit dem T-förmigen Querschnitt, wobei die Verbindungsmittel für jede durchgehende Bohrung (14) ein Paar L-förmiger Endverbinder (18, 19) umfassen, von denen jeder mit einem Abschnitt parallel zu einer der genannten Oberflächen (31, 32; 35, 36) angeordnet ist.

3. Eine perforierte Platte (10) für die Verbindung einander entsprechender Enden von Kabeln, Rohren und dergleichen, insbesondere für Kraftfahrzeuge, umfassend eine Mehrzahl von durchgehenden Bohrungen (14), die in mindestens einer Reihe angeordnet sind und entsprechende Achsen (28) aufweisen, die in zueinander parallelen und zu der Anlageebene (12) der Platte (10) senkrechten Ebenen liegen, wobei jede der durchgehenden Bohrungen (14) positioniert ist in Übereinstimmung mit einer zugeordneten Achse (30) senkrecht zu der Anlageebene (12) und koplanar mit der jeweiligen Achse (28), um so mit dieser einen spitzen Winkel (A) vorgegebenen Wertes zu bilden, dadurch gekennzeichnet, daß die einander abgekehrten Endabschnitte jeder der durchgehenden Bohrungen (14) ausgebildet sind zur Aufnahme von Verbindungsmitteln (18, 19) für die einander entsprechenden Endabschnitte (21, 22) der Kabel, Rohre und dergleichen, und daß die Achsen (28) benachbarter durchgehender Bohrungen (14) den spitzen Winkel (A) auf einander abgekehrten Seiten der zugeordneten senkrechten Achse (30) bilden.

4. Eine Platte nach Anspruch 3, dadurch gekennzeichnet, daß sie in Übereinstimmung mit jeder durchgehenden Bohrung (14) einen im wesentlichen T-förmigen Querschnitt aufweist mit einem Schenkel (24) und einem Paar einander abgekehrter Fortsätze (25, 26), an denen die Anlageebene (12) vorgesehen ist, welche Endabschnitte der durchgehenden Bohrungen (14) sich in einander abgekehrte Oberflächen (31, 32; 35, 36) der Fortsätze (25, 26) bzw. des Schenkels (24) in Übereinstimmung mit dem T-förmigen Querschnitt öffnen.

5. Eine Platte nach Anspruch 4, dadurch gekennzeichnet, daß die Oberflächen (31, 32) der Fortsätze (25, 26), in welche ein Ende der durchgehenden Bohrungen (14) sich öffnet, senkrecht verlaufen zu den entsprechenden Achsen (28), wobei die entsprechenden Oberflächen (35, 36) des Schenkels (24), in die sich der gegenüberliegende Endabschnitt der durchgehenden Bohrung (14) öffnet, parallel sind zu den entsprechenden Oberflächen (31, 32) der Fortsätze (25, 26). Eine Platte nach einem der vorangehenden Ansprüche, dadurch gekennzeichnet, daß die einander abgekehrten Endabschnitte der durchgehenden Bohrungen (14) mit Innengewinde versehen sind.

7. Eine Platte nach einem der vorangehenden Ansprüche, dadurch gekennzeichnet, daß jeder Endabschnitt jeder durchgehenden Bohrung (14) innen einen rohrförmigen Einsatz (41, 42) mit Innengewinde aufnimmt.

8. Eine Platte nach einem der vorangehenden Ansprüche, dadurch gekennzeichnet, daß der spitze Winkel (A) im wesentlichen zwischen 10° und 30° liegt.

9. Eine Platte nach Anspruch 8, dadurch gekennzeichnet, daß der spitze Winkel (A) in der Größenordnung von 15° liegt.

## Revendications

1. Un agencement de plaque perforée (10) pour joindre les extrémités correspondantes de câbles, tuyaux et analogue, ladite plaque (10) étant fixée en correspondance avec une ouverture (9) ménagée dans une cloison de séparation (3) interposée entre un premier compartiment (4) et un second compartiment (5) d'un véhicule automobile (1), ladite plaque (10) étant du type comprenant une pluralité de perçages traversants (14), dont les parties d'extremité opposée sont agencées pour recevoir des moyens formant raccords (18, 19) pour les parties d'extrémité respectives (21, 22) desdits câbles, tuyaux et analogue, logés respectivement dans ledit premier compartiment (4) et ledit second compartiment (5), lesdits perçages traversants (14) étant disposés en au moins une rangée, et avec leurs axes respectifs (28) situés dans des plans parallèles entre eux et perpendiculaires au plan (12) dans lequel ladite plaque (10) vient en appui contre ladite cloison de séparation (3), l'axe (28) de chacun desdits perçages traversants (14) formant, avec un axe associé (30) perpendiculaire audit plan d'appui (12) et situé dans le plan parallèle dans lequel sont situés les axes respectifs (28) dudit perçage (14), un angle aigu correspondant (A) d'une valeur prédéterminée, caractérisé en ce que les axes (28) des perçages traversants adjacents (14) forment ledit angle aigu (A) sur les côtés opposés dudit axe associé (30).

2. Un agencement selon la revendication 1, caractérisé en ce que ladite plaque (10) comprend, en correspondance avec chaque perçage traversant (14) une section en coupe transversale sensiblement en forme de T, dont une tige (24) est agencée pour s'étendre au travers de ladite ouverture (9), et comporte une paire d'appendices en opposition (25, 26) qui, en service, sont reliés sur le coté en regard de ladite cloison de séparation (3) par ledit plan d'appui (12), lesdites parties d'extrémité desdits perçages traversants (14) débouchant respectivement dans les surfaces opposées (31, 32; 35, 36), respectivement, desdits appendices (25, 26) et de ladite tige (24) en correspondance avec la section en coupe transversale en forme de T, lesdits moyens de raccordement comprenant, pour chaque perçage traversant (14), une paire d'organes de raccordement en forme de L (18, 19), chacun d'eux comprenant une partie parallèle à l'une desdites surfaces (31, 32; 35, 36).

3. Une plaque perforée (10) pour joindre les extrémités correspondantes de câbles, tuyaux et analogue, en particulier pour véhicules automobiles, comprenant une pluralité de perçages traversants (14) disposés en au moins une rangée et dont les axes respectifs (28) sont situés dans des plans parallèles entre eux et perpendiculaires à un plan d'appui (12) de ladite plaque (10), chacun desdits perçages traversants (14) étant situé en correspondance avec un axe associé (30) perpendiculaire audit plan d'appui (12) et coplanaire avec l'un desdits axes respectifs (28), de manière a former avec celui-ci un angle aigu (A) de valeur prédéterminée, caractérisée en ce que les parties d'extrémité opposées de chacun desdits perçages traversants (14) sont agencées pour recevoir les moyens de raccordement (18, 19) des parties d'extrémité respectives (21, 22) desdits câbles, tuyaux et analogue, et en ce que les axes (28) des perçages traversants adjacents (14) forment ledit angle aigu (A) sur les côtés opposés dudit axe perpendiculaire associé (30).

4. Une plaque selon la revendication 3, caractérisée en ce qu'elle comporte, en correspondance avec chaque perçage traversant (14) une section en coupe transversale sensiblement en forme de T, comprenant une tige (24) et une paire d'appendices opposés (25, 26) sur lesquels ledit plan d'appui (12) est prevu, lesdites parties d'extrémité desdits perçages traversants (14) débouchant, respectivement, dans les surfaces opposées respectives (31, 32; 35, 36) desdits appendices (25, 26) et de ladite tige (24), en correspondance avec ladite section en coupe transversale en forme de T.

5. Une plaque selon la revendication 4, caractérisée en ce que lesdites surfaces (31, 32) desdits appendices (25, 26) dans lesquels une extrémité desdits perçages traversants (14) débouche sont perpendiculaires auxdits axes respectifs (28), les surfaces correspondantes (35, 36) de ladite tige (24) dans lequel la partie d'extrémité opposée desdits perçages traversants (14) débouchent étant parallèles aux surfaces respectives (31, 32) desdits appendices (25, 26).

6. Une plaque selon l'une quelconque des précédentes revendications, caractérisée en ce que lesdites parties d'extrémité opposées desdits perçages traversants (14) sont taraudées intérieurement.

7. Une plaque selon l'une quelconque des précédentes revendications, caractérisée en ce que chacune desdites parties d'extrémité de chacun desdits perçages traversants (14) enferme un insert tubulaire rapporté, taraudé intérieurement (41, 42).

8. Une plaque selon l'une quelconque des précédentes revendications, caractérisée en ce que ledit angle aigu (A) se trouve sensiblement entre 10° et 30°.

9. Une plaque selon la revendication 8, caractérisée en ce que ledit angle aigu (A) est de l'ordre de 15°.

Fig.2

Fig.1

**Fig.3**

**Fig.4**

**Fig.5**

**Fig.6**

**Fig.7**

**Fig.8**